# EUROPÄISCHE PATENTANMELDUNG

(11) **EP 0 827 924 A2**
(43) Veröffentlichungstag der Anmeldung: **11.03.1998**
(21) Anmeldenummer: 97890169.2
(22) Anmeldetag: 21.08.1997
(51) Int. Cl.: B65G 51/06, B65G 51/32

(54) **Rohrpoststation**

(30) Priorität: 06.09.1996 AT 524/96
(71) Anmelder: Sumetzberger, Walter, A-1110 Wien (AT)
(72) Erfinder: Sumetzberger, Walter, A-1110 Wien (AT)
(74) Vertreter: Müllner, Erwin, Dr.

(57) **Zusammenfassung**

Die Rohrpoststation (1) ist für Büchsen (12) bestimmt, die einen um eine Schwenkachse (15) schwenkbaren Deckel (14) aufweisen, wobei die Schwenkachse (15) parallel zur Symmetrieachse der Büchse (12) und am Rand der Büchse (12) angeordnet ist. Die Rohrpoststation (1) weist eine dicht schließende Frontklappe (4) auf, die zur Beladung der Rohrpoststation (1) ausschwenkbar oder ausziehbar ist, und ein rohrförmiges Magazin (7), in das die Büchse (12) bei geöffneter Frontklappe (4) einsetzbar bzw. aus dem die Büchse (12) bei geöffneter Frontklappe (4) entnehmbar ist, auf. Erfindungsgemäß ist das Magazin (7) ebenfalls ausschwenkbar bzw. ausziehbar, wobei aber der Weg des Magazins (7) kürzer ist als der Weg der Frontklappe (4). Auf diese Weise kann der Deckel (14) der Büchse (12) auch dann geöffnet werden, wenn sich die BÜchse (12) im Magazin (7) befindet.

## Beschreibung

Die vorliegende Erfindung betrifft eine Rohrpoststation für Büchsen mit einem um eine Schwenkachse schwenkbaren Deckel, wobei die Schwenkachse parallel zur Symmetrieachse der Büchse und am Rand der Büchse angeordnet ist, wobei die Rohrpoststation eine dicht schließende Frontklappe, die zur Beladung der Rohrpoststation ausschwenkbar oder ausziehbar ist, und ein rohrförmiges Magazin aufweist, in das die Büchse bei geöffneter Frontklappe einsetzbar bzw. aus dem die Büchse bei geöffneter Frontklappe entnehmbar ist.

Der Deckel von Büchsen für Rohrpostanlagen ist oft aufgeschraubt. Dies ist zwar eine sehr einfache und zuverlässige Verbindung, sie hat aber den Nachteil, daß die Bedienungsperson beide Hände braucht, um die Büchse zu öffnen: mit einer Hand muß sie die Büchse halten, mit der zweiten den Deckel abschrauben. Es wurde daher auch schon vorgeschlagen, den Deckel schwenkbar anzubringen. Dabei liegt die Schwenkachse parallel zur Symmetrieachse der Büchse, und zwar am Rand der Büchse. Beim Verschwenken bleibt daher der Deckel in seiner Ebene (normal zur Symmetrieachse der Büchse), er gibt aber die gesamte Öffnung der Büchse frei, wenn er um 180° weggeschwenkt wird. Diese Schwenkbewegung kann bequem mit einer Hand, ja sogar mit einem Finger durchgeführt werden, sofern die Büchse gegen Verschieben fixiert ist.

Es sind anderseits auch Rohrpoststationen für Frontbeladung bekannt. Diese Rohrpoststationen weisen eine Frontklappe auf, die nach vorne ausgeschwenkt oder ausgezogen werden kann. Auf der Frontklappe ist ein rohrförmiges Magazin fest montiert. Bei geschlossener Frontklappe fluchtet dieses Magazin mit dem Rohr der Rohrpostanlage, sodaß eine Büchse abgeschickt oder empfangen werden kann. Wurde eine Büchse empfangen, so bewegt sich diese beim Öffnen der Frontklappe in dem auf der Frontklappe fixierten Magazin zusammen mit der Frontklappe nach vorne, sodaß sie schließlich bequem entnommen werden kann. Nachteilig ist dabei, daß eine Büchse mit wegschwenkbarem Deckel nicht im Magazin geöffneten werden kann, weil dabei die Frontklappe im Weg ist; auch eine derartige Büchse muß daher entnommen werden.

Es ist Aufgabe der vorliegenden Erfindung, eine Rohrpoststation der eingangs genannten Art so weiterzubilden, daß Büchsen mit wegschwenkbarem Deckel im Magazin geöffnet werden können.

Diese Aufgabe wird durch eine Rohrpoststation der eingangs genannten Art erfindungsgemäß dadurch gelöst, daß das Magazin ebenfalls ausschwenkbar bzw. ausziehbar ist, wobei aber der Weg des Magazins kürzer ist als der Weg der Frontklappe. Erfindungsgemäß ist also das Magazin nicht fest auf der Frontklappe angebracht, sondern eigenständig ausschwenkbar bzw. ausziehbar. Durch entsprechende Anordnung von Anschlägen wird bewirkt, daß der Weg des Magazins kürzer ist als der Weg der Frontklappe, sodaß im geöffneten Zustand ein ausreichend großer Abstand entsteht, wodurch der Deckel der Büchse weggeschwenkt werden kann, während sich diese im Magazin befindet. Die erfindungsgemäße Rohrpoststation ist also denkbar einfach in der Bedienung. Nach Ankunft einer Büchse wird die Frontklappe geöffnet (dies wird üblicherweise automatisch erfolgen) und auch das Magazin ausgefahren bzw. ausgeschwenkt. Nun wird von der Bedienungsperson der Deckel der Büchse weggeschwenkt, was sehr einfach geht, weil sich die Büchse im Magazin nicht seitlich verschieben läßt. Die Büchse muß daher in keiner Weise zusätzlich gehalten werden und läßt sich mit einer Hand öffnen, selbst dann, wenn in dieser Hand bereits das wegzusendende Gut gehalten wird. Nach dem Öffnen wird die Büchse entleert bzw. gefüllt und der Deckel geschlossen. Nun muß nur noch Frontklappe geschlossen werden, und die Büchse kann weggeschickt werden.

Es ist zweckmäßig, wenn die Frontplatte mit dem Magazin kinematisch verbunden ist. Auf diese Weise wird beim Öffnen bzw. Schließen der Frontklappe auch das Magazin ausgefahren oder ausgeschwenkt bzw. eingefahren oder eingeschwenkt, ohne daß ein unabhängiger Antrieb oder eine zusätzliche händische Betätigung erforderlich wäre.

Schließlich ist nach einer Ausgestaltung der Erfindung vorgesehen, daß die hintere Hälfte des Rohrs der Rohrpostanlage bei geschlossenem Magazin unmittelbar vor diesem endet, wogegen in der vorderen Hälfte zwischen dem Rohr und dem Magazin eine Aussparung vorgesehen ist. Bei dieser Ausgestaltung der Rohrpoststation soll die Büchse derartige Abmessungen haben, daß der Deckel im Bereich der Aussparung liegt. Damit kann die Büchse samt Deckel problemlos mit dem Magazin ausgefahren oder ausgeschwenkt werden, obwohl das Magazin durchgehend unterhalb des unteren Randes des Deckels endet, sodaß der Dekkel in jeder Stellung der Büchse problemlos ausgeschwenkt werden kann. Dennoch kann der Übergang zwischen dem Rohr der Rohrpostanlage und dem Magazin von der Büchse problemlos überwunden werden, weil die Büchse in der hinteren Hälfte exakt geführt ist.

Die zuletzt beschriebene Ausgestaltung kann realisiert werden, indem der obere Rand des Magazins entlang der vorderen Hälfte in einer Ebene liegt, die normal auf die Symmetrieachse des Magazins steht, indem die hintere Hälfte des Magazins in einer Ebene endet, die gegenüber der anderen Ebene nach hinten abfällt, und indem das Rohr der Rohrpostanlage bei der nach hinten abfallenden Ebene endet. Diese Ausführung ist nicht nur einfach zu realisieren, die nach hinten abfallende Ebene bewirkt auch, daß die Achse, um die das Magazin schwenkbar ist, weit vorne (nahe bei der Frontklappe) angeordnet werden kann.

Anhand der beiliegenden Figuren wird die Erfindung näher erläutert. Es zeigt: Fig. 1 eine erste Ausführungsform einer erfindungsgemäßen Rohrpoststation in geschlossener Stellung; Fig. 2 dieselbe in geöffneter Stellung; Fig. 3 eine zweite Ausführungsform einer erfindungsgemäßen Rohrpoststation in geschlossener Stellung; und Fig. 4 dieselbe in geöffneter Stellung.

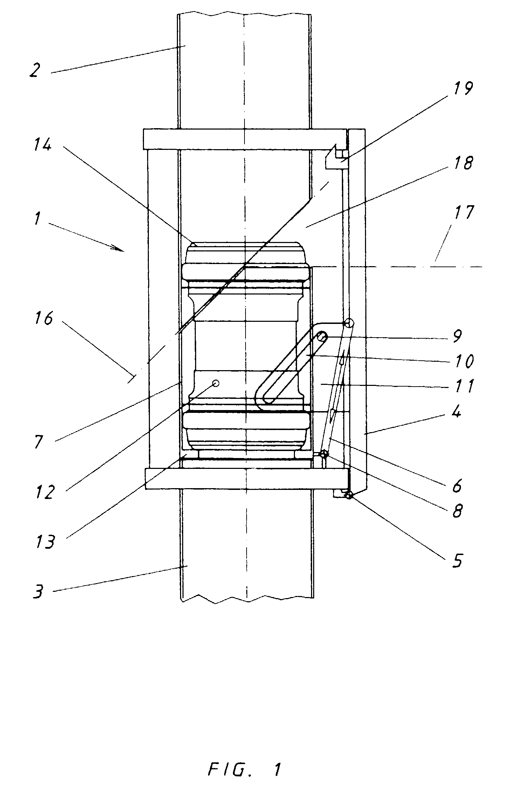

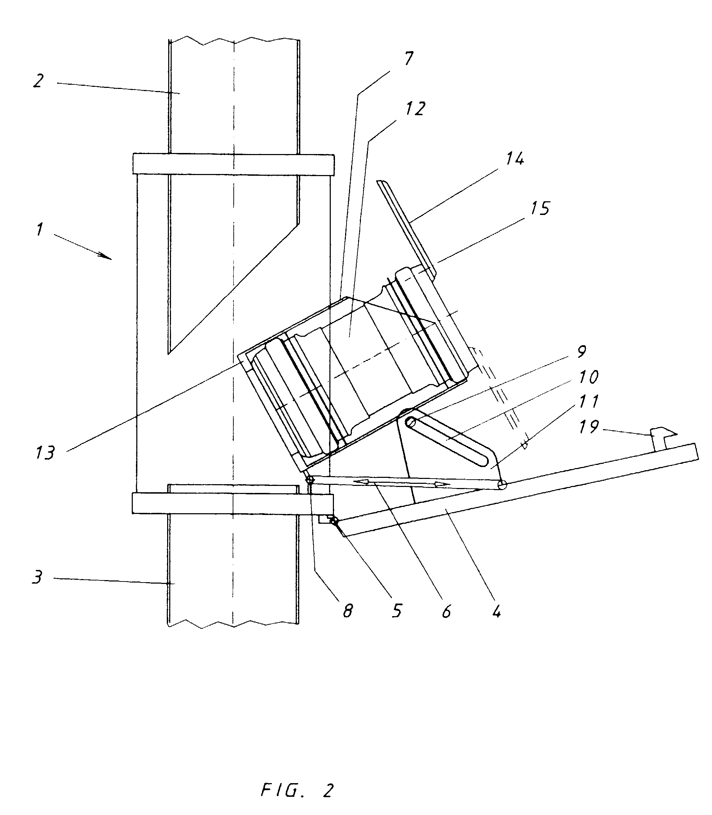

Zunächst wird die erste Ausführungsform anhand der Fig. 1 und 2 erläutert: Eine Rohrpoststation 1 ist in üblicher Weise mit dem Ende eines Rohres 2 verbunden, d.h. das Rohr 2 ragt ein Stück in das Innere der Rohrpoststation 1. Durch dieses Rohr 2 erfolgt der Büchsentransport. Unten ist die Rohrpoststation 1 mit einem Rohr 3 verbunden, das nur zur Zu- bzw. Abfuhr von Luft und nicht zum Büchsentransport dient. In der Betriebsstellung ist die Rohrpoststation 1 mit einer Front; klappe 4 luftdicht abgeschlossen. Die Frontklappe 4 läßt sich um eine Achse 5 schwenken, sodaß sie in die in Fig. 2 gezeigte Stellung gelangen kann. Es sind Gasdruckfedern 6 vorgesehen, die die Frontklappe 4 in Richtung Offenstellung vorspannen. In der Geschlossenstellung wird sie durch einen Verschluß 19 verriegelt.

In der Rohrpoststation 1 ist weiters ein rohrförmiges Magazin 7 vorgesehen. Dieses Magazin 7 ist um eine Achse 8 schwenkbar. Im Abstand von der Achse 8 ist ein Führungsstift 9 vorgesehen, der in den Schlitz 10 einer Kulisse 11 eingreift, die ihrerseits an der Frontklappe 4 fixiert ist. Dadurch wird eine kinematische Verbindung zwischen Frontklappe 4 und Magazin 7 erzielt, die die Drehbewegung der Frontklappe 4 auf das Magazin 7 überträgt.

In das Magazin 7 ist eine Büchse 12 eingesetzt; damit diese nicht durch das rohrförmige Magazin 7 durchfällt, weist dieses unten einen Kreisring 13 auf. Die Büchse 12 weist oben einen Deckel 14 auf, der auf der eigentlichen Büchse 12 um eine Schwenkachse 15 (s. Fig. 2) schwenkbar ist. Die Schwenkachse 15 liegt dabei parallel zur Symmetrieachse der Büchse 12 und am Rand der Büchse 12, sodaß sich der Deckel 14 in seiner Ebene (also normal zur Symmetrieachse der Büchse 12) zur Seite schwenken läßt, bis die gesamte Büchsenöffnung freigegeben ist.

Die Rohrpoststation 1 wird wie folgt verwendet: Zunächst kommt von oben eine Büchse 12 in die geschlossene Rohrpoststation 1 (s. Fig. 1). Sie wird dabei wie üblich von einem Luftpolster abgebremst, damit sie nicht mit voller Geschwindigkeit auf den Kreisring 13 aufschlägt. Sobald die Büchse also langsam in die Rohrpoststation 1, genauer in das Magazin 7, eingefahren ist, wird dies von einem Sensor, beispielsweise einer Lichtschranke, erkannt und der Verschluß 19 freigegeben. Durch die Gasdruckfedern 6 wird die Frontklappe 4 vollautomatisch in die in Fig. 2 dargestellte Lage gebracht. Über die Kulisse 11 und den Führungsstift 9 wird diese Drehbewegung auf das Magazin 7 übertragen, wobei aber der die Oberseite des Magazins 7 bzw. der Büchse 12 bei dieser Bewegung hinter der Frontklappe 4 zurückbleibt. Dadurch entsteht sowohl zwischen der Büchse 12 und der eigentlichen Rohrpoststation 1 als auch zwischen der Büchse 12 und der Frontklappe 4 ein Freiraum, der ausreicht, um den Deckel 14 der Büchse 12 in die Offenstellung zu schwenken, egal, in welcher Lage die Büchse 12 in der Rohrpoststation 1 ankommt. (In Fig. 2 ist die Büchse so gezeichnet, daß die Schwenkachse 15 oben liegt, d.h. der Deckel 14 nach oben aufschwenkt; mit strichlierten Linien ist die Lage des Deckels 14 angedeutet, die sich ergibt, wenn die Büchse demgegenüber um 180° verdreht, also mit unten liegender Schwenkachse 15, angekommen wäre.) Die Bedienungsperson kann also sofort den Deckel 14 mit einer Hand oder sogar mit einem Finger öffnen und die Büchse 12 entladen oder beladen. Dann muß sie nur noch den Deckel 14 und die Frontklappe 4 schließen, damit die Büchse 12 automatisch abtransportiert werden kann.

Wie man auf Fig. 2 erkennt, ist es zweckmäßig, wenn die Achse 8 relativ weit vorne, also in der Nähe der Frontklappe 4 angebracht ist. Dies hat aber zur Folge, daß die Trennung zwischen dem Rohr 2 und dem Magazin 7 nicht einfach normal zur Rohrachse verlaufen kann, weil sonst die Kippbewegung des Magazins 7 nicht möglich wäre: insbesondere der hintere Teil des Magazins wandert nämlich zu Beginn der Kippbewegung nicht nur nach vorne, sondern auch relativ stark nach oben. Man muß daher die Trennung zwischen dem Rohr 2 und dem Magazin 7 in eine nach hinten abwärts geneigte Ebene 16 legen. Da diese Ebene 16 aber so hoch liegen muß, daß das Magazin 7 die Büchse 12 auch in der Offenstellung ausreichend führt, anderseits aber das Magazin nicht das Öffnen des Deckels 14 behindern darf (und somit unter dem unteren Deckelrand enden muß), muß der obere Rand des Magazins 7 in zwei unterschiedlichen Ebenen liegen: entlang der vorderen Hälfte liegt er in einer Ebene 17, die normal auf die Symmetrieachse des Magazins 7 steht, und nur entlang der hinteren Hälfte des Magazins 7 liegt er in der nach hinten abwärts geneigten Ebene 16. Nur die hintere Hälfte des Rohrs 2 der Rohrpostanlage endet bei geschlossenem Magazin unmittelbar vor diesem, bei der vorderen Hälfte ergibt sich dazwischen eine in der Seitenansicht dreieckige Aussparung 18. Es hat sich gezeigt, daß diese Aussparung den sicheren Übergang der Büchse 12 zum Rohr 2 nicht gefährdet; die nahezu kontinuierliche Führung entlang der hinteren Hälfte ist ausreichend.

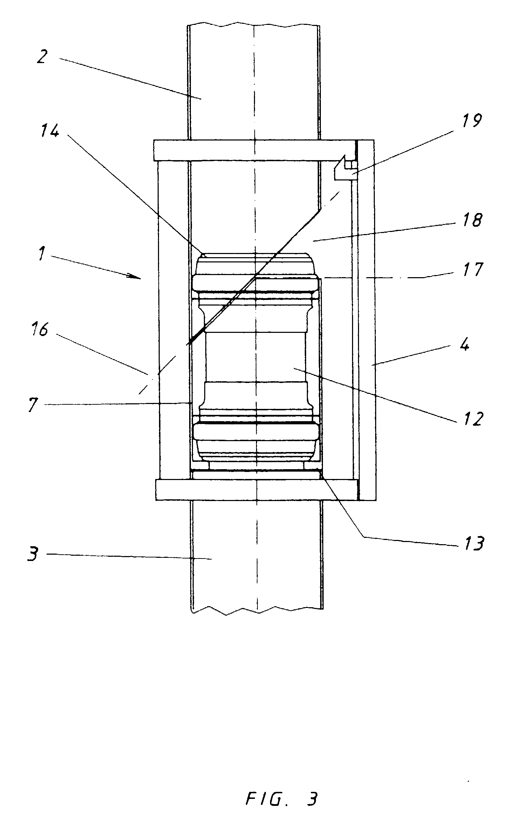

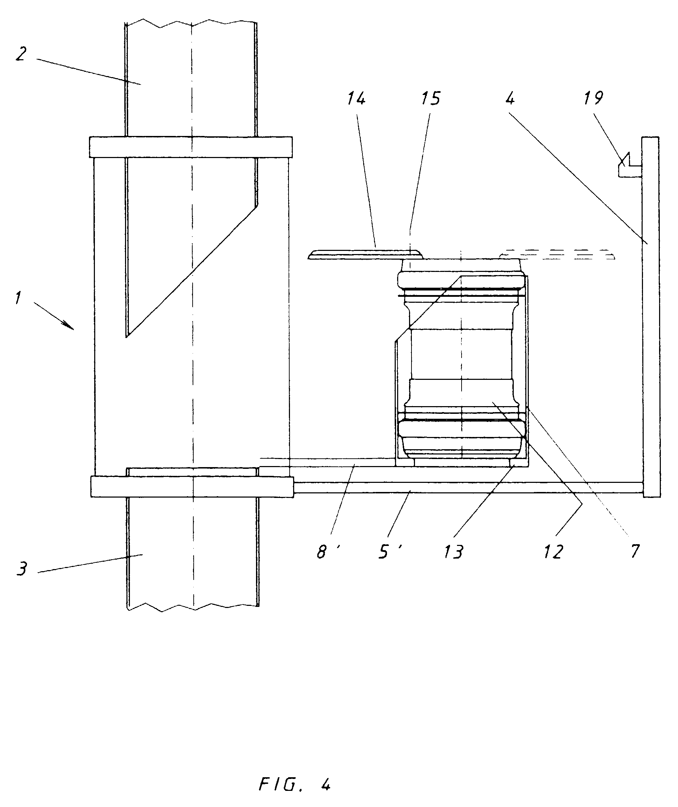

Die zweite Ausführungsform (s. Fig. 3 und 4) unterscheidet sich von der ersten Ausführungsform (s. Fig. 1 und 2) nur insofern, als die Frontklappe 4 und das Magazin 7 nicht nach vorne ausschwenkbar, sondern nach vorne ausschiebbar sind. Es sind daher die Achsen 5 und 8 durch Auszugschienen 5' und 8' (s. Fig. 4) ersetzt. Es kann sich dabei um herkömmliche Teleskop-Schubladenführungen handeln. Es können selbstverständlich auch hier Gasdruckfedern und eine kinematische Verbindung, die die Translationsbewegung der Frontklappe 4 auf das Magazin 7 überträgt, vorgesehen werden. Wichtig ist dabei, daß auch hier der Weg des Magazins 7 geringer ist als der Weg der Frontklappe 4, damit ein ausreichender Freiraum zum Öffnen des Deckels 14 zwischen dem Magazin 7 und der Frontklappe 4 entsteht.

Obwohl hier das Magazin 7 beim Ausschieben exakt waagrecht bewegt wird, ist auch hier die spezielle Ausbildung des oberen Randes, wie er anhand der Fig. 1 und 2 erläutert wurde, sinnvoll. Es muß nämlich der obere Rand des Magazins 7 unterhalb des unteren Randes des Deckels 14 enden, damit dieser geöffnet werden kann, und bei geschlossener Rohrpoststation muß der untere Rand des Rohres 2 (zumindest in der vorderen Hälfte) oberhalb des höchsten Punktes des Deckels 14 enden, damit die Büchse 12 samt Deckel 14 verschoben werden kann. Bei waagrechtem Rand von Rohr 2 bzw. Magazin 7 würde sich somit ein Spalt ergeben, der mindestens die Höhe des Deckels haben müßte. Dies wird bei der hier dargestellten Ausführungsform vermieden.

Bei ausschiebbarem Magazin sind aber auch andere Ausbildungen des oberen Randes des Magazins 7 bzw. des unteren Randes des Rohres 2 denkbar. So könnte z.B. der untere Rand des Rohres 2 in der vorderen Hälfte in einer waagrechten Ebene über dem Deckel 14 liegen, und in der hinteren Hälfte in der Ebene 17, sodaß sich eine Stufe ergibt; in diesem Fall könnte der obere Rand des Magazins 7 durchgehend in der Ebene 17 liegen.

## Patentansprüche

1. Rohrpoststation für Büchsen mit einem um eine Schwenkachse schwenkbaren Deckel, wobei die Schwenkachse parallel zur Symmetrieachse der Büchse und am Rand der Büchse angeordnet ist, wobei die Rohrpoststation eine dicht schließende Frontklappe, die zur Beladung der Rohrpoststation ausschwenkbar oder ausziehbar ist, und ein rohrförmiges Magazin aufweist, in das die Büchse bei geöffneter Frontklappe einsetzbar bzw. aus dem die Büchse bei geöffneter Frontklappe entnehmbar ist, dadurch gekennzeichnet, daß das Magazin (7) ebenfalls ausschwenkbar bzw. ausziehbar ist, wobei aber der Weg des Magazins (7) kürzer ist als der Weg der Frontklappe (4).

2. Rohrpoststation nach Anspruch 1, **dadurch gekennzeichnet**, daß die Frontplatte (4) mit dem Magazin (7) kinematisch verbunden ist.

3. Rohrpoststation nach Anspruch 1 oder 2, **dadurch gekennzeichnet**, daß die hintere Hälfte des Rohres (2) der Rohrpostanlage bei geschlossenem Magazin (7) unmittelbar vor diesem endet, wogegen in der vorderen Hälfte zwischen dem Rohr (2) und dem Magazin (7) eine Aussparung (18) vorgesehen ist.

4. Rohrpoststation nach Anspruch 3, **dadurch gekennzeichnet**, daß der obere Rand des Magazins (7) entlang der vorderen Hälfte in einer Ebene (17) liegt, die normal auf die Symmetrieachse des Magazins (7) steht, daß die hintere Hälfte des Magazins (7) in einer Ebene (16) endet, die gegenüber der anderen Ebene (17) nach hinten abfällt, und daß das Rohr (2) der Rohrpostanlage bei der nach hinten abfallenden Ebene (16) endet.
